# EUROPÄISCHE PATENTSCHRIFT

(11) **EP 0 718 630 B1**
(45) Veröffentlichungstag und Bekanntmachung des Hinweises auf die Patenterteilung: **17.04.2002**
(21) Anmeldenummer: 95119771.4
(22) Anmeldetag: 15.12.1995
(51) Int. Cl.: B24B 31/00, G01N 35/10, C09K 3/14

(54) **Glättverfahren**
Method for smoothing
Procédé de lissage

(30) Priorität: 19.12.1994 DE 4445333
(43) Veröffentlichungstag der Anmeldung: 26.06.1996
(73) Patentinhaber: Möller Feinmechanik GmbH & Co. KG, 36043 Fulda (DE)
(72) Erfinder: Kiessling, Jürgen, D-36110 Schlitz-Bernshausen (DE); Schäfer, Siegfried, D-36100 Petersberg (DE)
(74) Vertreter: Schlagwein, Udo, Dipl.-Ing.

(56) Entgegenhaltungen:
- EP-A- 0 314 050
- EP-A- 0 686 684
- DE-A- 1 419 958
- DE-A- 3 800 834
- DE-A- 3 825 533
- GB-A- 2 247 892
- US-A- 4 430 358
- DATABASE WPI Week 8845 Derwent Publications Ltd., London, GB; AN 88-318228 & JP-A-63 234 094 (KAO CORP) , 29.September 1988

## Beschreibung

Die Erfindung betrifft ein Verfahren zum Glätten der Innenmantelfläche eines Rohres, insbesondere einer Kanüle oder Hohlnadel, durch Förderung einer in Bezug auf das Material des Rohres chemisch aggressiven Flüssigkeit durch das Rohr.

Die DE 38 25 533 A1 beschreibt die Behandlung der Innenmantelfläche von Rohren mit einer Ätzflüssigkeit, welche durch die Rohre hindurchgepumpt wird, und befasst sich mit dem Problem, dass durch die Ätzwirkung die Rohre eine schwach konische Form erhalten, weil die Wirkung der Ätzflüssigkeit über die Länge der Rohre abnimmt. Deshalb lehrt die Schrift, bei der Ätzbehandlung die Strömungsrichtung während der Behandlung zu wechseln.

Die DE 38 00 834 A1 beschreibt ein Verfahren zum Glätten von Werkstücken durch Behandlung mit einer in Bezug auf das Material der Werkstücke chemisch aggressiven Flüssigkeit, die zusätzlich das Werkstück mechanisch behandelnde feste Stoffe enthält. Gemäß diesem Verfahren werden die Werkstücke mit der Behandlungsflüssigkeit besprüht oder in diese eingetaucht.

Bei der automatischen Analyse von Flüssigkeiten entnimmt man meist mit einer Hohlnadel geringe bis geringste Mengen von chemischen Substanzen und Flüssigkeiten sowie Proben von körpereigenen Flüssigkeiten aus verschiedenen Reagenzgläsern und analysiert diese Proben dann in einem Analysengerät. Bevor anschließend eine andere Probe genommen und analysiert wird, muss dafür gesorgt werden, dass an der Hohlnadel keine Rückstände der vorangegangenen Probe verbleiben, weil es sonst zu einer Verschleppung von Stoffen käme, wodurch das Analysenergebnis verfälscht würde. Besonders strenge Anforderungen an den Ausschluss von Verschleppungen bestehen bei der Analyse menschlicher Körperflüssigkeiten, beispielsweise dem Aidstest oder der Bestimmung des Rhesusfaktors menschlichen Blutes. Das Anhaften von Flüssigkeiten an Rohren muss jedoch auch auf vielen anderen Gebieten der Technik vermieden werden, insbesondere dort, wo kleinste Bohrungen in mechanisch oder spanlos hergestellten Teilen vorkommen.

In der Analysentechnik versucht man bislang, der Gefahr von Verschleppungen mit aufwendigen und zeitraubenden Spülvorgängen zwischen den einzelnen Probenahmen zu begegnen. Solche Spülvorgänge widersprechen jedoch dem Wunsch, möglichst rasch hintereinander Proben nehmen und analysieren zu können, was beispielsweise beim Aidstest von gespendetem Blut erforderlich ist.

Das Anhaften von Flüssigkeiten an Rohren kann dadurch verringert werden, dass die Rohre eine möglichst glatte Oberfläche erhalten. Deshalb setzt man in der Analysentechnik oftmals Kunststoffkanülen ein, welche nach jeder Probeentnahme ausgetauscht werden. Die hierbei auftretenden Entsorgungsprobleme sind jedoch nicht befriedigend zu lösen. Deshalb bevorzugt man Analysennadeln aus Stahl, da diese eine sehr große Haltbarkeit und Wiederverwendbarkeit haben. Mit solchen Nadeln tritt jedoch das zuvor erwähnte Verschleppungsproblem aufgrund der nicht ausreichend glatten Oberfläche auf.

Der Erfindung liegt das Problem zugrunde, ein Verfahren der eingangs genannten Art zu entwickeln, durch welches sich ein möglichst gleichmäßiger Materialabtrag an der zu glättenden Innenmantelfläche eines Rohres, insbesondere einer Kanüle oder Hohlnadel, erreichen lässt.

Dieses Problem wird erfindungsgemäß dadurch gelöst, dass die Behandlungsflüssigkeit die Oberfläche mechanisch behandelnde feste Stoffe enthält, dass in das Rohr vor dem Durchfördern der Flüssigkeit ein einen Spalt zur Innenwandung des Rohres frei lassender Dorn eingesetzt wird und dass anschließend die Flüssigkeit durch diesen Spalt gefördert wird.

Ein solches Verfahren eignet sich insbesondere zum Glätten der Innenwand einer Kanüle oder Hohlnadel, wenn der Innendurchmesser kleiner als 0,8 mm und der Bohrungsdurchmesser im Verhältnis zur Bohrungslänge sehr klein ist und bei reduzierten Hohlnadeln im Kegelbereich bzw. Übergang vom kleinen zum großen Innendurchmesser. Dank der Erfindung lässt sich mit geringem Aufwand, einer relativ geringen, umzupumpenden Flüssigkeitsmenge und relativ rasch die innere Oberfläche von Rohren, insbesondere im kritischen Übergangsbereich vom Kegel und vom kleinen zum großen Durchmesser, glätten. Außerdem ergibt sich eine Reinigung der Innenoberfläche, wodurch Verschmutzungen aus der Vorfertigung der Teile drastisch reduziert werden. Da die Flüssigkeit durch das jeweilige Rohr hindurchgedrückt wird, gelangt sie auch zuverlässig gegen konische Übergänge im Bereich von Querschnittsveränderungen. Der zum Glätten erforderliche Materialabtrag erfolgt auf zweifache Weise, nämlich zum einen ausschließlich mechanisch durch die festen Stoffe, zum anderen dadurch, dass die chemisch aggressiven Mittel auf chemischem Wege Oberflächenteilchen entfernen. Hierdurch ist die erforderliche Glättung der Oberfläche besonders rasch zu erreichen. Das erfindungsgemäße Verfahren kann sowohl bei gezogenen als auch bei nahtlos geschweißten Rohren Anwendung finden. Besonders geeignet ist das erfindungsgemäße Verfahren für Rohre mit einem Innendurchmesser von unter 1 mm und abgesetzter, reduzierter Rohre. Durch den in das jeweilige Rohr eingesetzten Dorn erreicht man, dass die in der Flüssigkeit enthaltenen Feststoffe besonders intensiv gegen die Oberfläche des Rohres gelangen.

Durch das erfindungsgemäße Glättungsverfahren lässt sich eine so hohe Verschleppungsreduzierung bei Kapillarrohren, Analysennadeln und dergleichen erreichen, dass beispielsweise in der Analysentechnik bisher zwischen den einzelnen Probeentnahmen notwendige, zeitraubende Spülvorgänge unnötig werden, so dass sehr rasch hintereinander Proben genommen werden können. Auch die Entsorgungskosten werden dank des erfindungsgemäßen Verfahrens geringer, weil an den mit ihm hergestellten Analysennadeln oder Kanülen kaum Fremdstoffe anhaften.

Die Glättung auf mechanischem Wege kann durch Materialabtragung mit schleifähnlichem Charakter erfolgen, wenn als feste Stoffe Schleifkörner verwendet werden. Hierbei kann es sich beispielsweise um Korund (Al₂O₃) handeln.

Möglich ist zur mechanischen Glättung jedoch auch ein völlig anderes Wirkprinzip, nämlich eine Glättung durch Verdichten der Innenfläche, indem gemäß einer anderen Weiterbildung der Erfindung als feste Stoffe aus hartem Material bestehende Kugeln verwendet werden. Solche Kugeln, welche beispielsweise aus Glas bestehen, schlagen beim Passieren der Flüssigkeit durch das Rohr immer wieder gegen seine innere Mantelfläche und drücken dabei hervorspringende Materialspitzen flach. Es kommt also zu einem ähnlichen Effekt wie bei einer Verdichtung der Oberfläche.

Falls die Rohre aus Edelstahl bestehen, was beispielsweise bei Kanülen und Hohlnadeln für die Medizintechnik der Fall ist, verwendet man als chemisch aggressives Mittel vorzugsweise Schwefelsäure, Phosphorsäure oder Salzsäure.

Ein zusätzlicher Passivierungsarbeitsgang durch Eintauchen der Rohre in ein Beizbad entfällt, wenn gemäß einer anderen Weiterbildung der Erfindung die Flüssigkeit das Material des Rohres passivierende Mittel aufweist. Diese Mittel können auch mit den chemisch aggressiven Mitteln identisch sein.

Die Oberfläche kann zusätzlich zur Glättung auch versiegelt werden, so dass beim späteren Einsatz keine Eisenionen aus dem Rohr in die Flüssigkeit gelangen können, in die das Rohr eintaucht und die es aufnimmt, wenn gemäß einer anderen, besonders vorteilhaften Weiterbildung des erfindungsgemäßen Verfahrens nach dem Glätten mit der Flüssigkeit eine Antihaftbeschichtung mit einer Schichtdicke im Nanometerbereich erfolgt, indem eine Beschichtungsflüssigkeit durch das Rohr gefördert wird.

Das Beschichtungsmittel gelangt besonders gut in die durch die verbleibende Materialrauhigkeit vorhandenen Riefen, wenn man während des Durchführens der Beschichtungsflüssigkeit das Rohr um seine Längsachse rotieren lässt.

Eine besonders gleichmäßige Beschichtung ergibt sich, wenn nach dem Durchführen der Beschichtungsflüssigkeit das Rohr zum Aushärten der Beschichtung erhitzt wird und man dabei gleichzeitig Luft oder ein anderes Gas durch das Rohr strömen lässt. Ein solcher Luft- oder Gasstrom reißt das Beschichtungsmittel dort mit, wo sich unerwünscht große Beschichtungsstärken gebildet haben.

## Patentansprüche

1. Verfahren zum Glätten der Innenmantelfläche eines Rohres durch Förderung einer in Bezug auf das Material des Rohres chemisch aggressiven Flüssigkeit durch das Rohr, **dadurch gekennzeichnet, dass** die Flüssigkeit die Innenmantelfläche des Rohres mechanisch behandelnde feste Stoffe enthält, dass in das Rohr vor dem Durchfördern der Flüssigkeit ein einen Spalt zur Innenwandung des Rohres frei lassender Dorn eingesetzt wird und dass anschließend die Flüssigkeit durch diesen Spalt gefördert wird.

2. Glättverfahren nach Anspruch 1, **dadurch gekennzeichnet, dass** als feste Stoffe Schleifkörner verwendet werden.

3. Glättverfahren nach Anspruch 1, **dadurch gekennzeichnet, dass** als feste Stoffe aus hartem Material bestehende Kugeln verwendet werden.

4. Verfahren nach zumindest einem der vorangehenden Ansprüche, **dadurch gekennzeichnet, dass** für Rohre aus Edelstahl als chemisch aggressives Mittel Schwefelsäure, Phosphorsäure oder Salzsäure verwendet wird.

5. Verfahren nach zumindest einem der vorangehenden Ansprüche, **dadurch gekennzeichnet, dass** die Flüssigkeit das Material des Rohres passivierende Mittel aufweist.

6. Verfahren nach zumindest einem der vorangehenden Ansprüche, **dadurch gekennzeichnet, dass** nach dem Glätten mit der Flüssigkeit eine Antihaftbeschichtung mit einer Schichtdicke im Nanometerbereich erfolgt, indem eine Beschichtungsflüssigkeit durch das Rohr gefördert wird.

7. Verfahren nach Anspruch 6, **dadurch gekennzeichnet, dass** man während des Durchführens der Beschichtungsflüssigkeit das Rohr um seine Längsachse rotieren lässt.

8. Verfahren nach den Ansprüchen 6 oder 7, **dadurch gekennzeichnet, dass** nach dem Durchführen der Beschichtungsflüssigkeit das Rohr zum Aushärten der Beschichtung erhitzt wird und man dabei gleichzeitig Luft oder ein anderes Gas durch das Rohr strömen läßt.

## Claims

1. Method for smoothing the inner casing surface of a pipe by conveying through the pipe a liquid which is chemically aggressive relative to the material of the pipe, **characterised in that** the liquid contains solid substances which mechanically treat the inner casing surface, that prior to conveying of the liquid a mandrel which leaves a gap to the inner wall of the pipe is inserted into the pipe, and subsequently the liquid is conveyed through said gap.

2. Smoothing method according to Claim 1, **characterised in that** grinding grains are used as solid substance.

3. Smoothing method according to Claim 1, **characterised in that** balls made of a hard material are used as solid substance.

4. Method according to at least one of the above claims, **characterised in that** sulfuric acid, phosphoric acid or hydrochloric acid is used as aggressive substance for pipes of precious metal.

5. Method according to at least one of the above claims, **characterised in that** the liquid comprises means which pacify the material of the pipe.

6. Method according to at least one of the above claims, **characterised in that** after smoothing with the liquid, an anti-adhesion coating with a layer thickness in the nanometer range is applied **in that** a coating liquid is conveyed through the pipe.

7. Method according to Claim 6, **characterised in that** the pipe is rotated around its longitudinal axis whilst the coating liquid is passed through.

8. Method according to one of Claims 6 or 7, **characterised in that** after having passed the coating liquid through the pipe, the pipe is heated for the purpose of curing the coating, and at the same time air or another gas is allowed to flow through the pipe.

## Revendications

1. Procédé pour polir la surface de la paroi intérieure d'un tube et consistant à refouler à travers le tube un liquide qui est chimiquement agressif pour la matière du tube, **caractérisé en ce que** le liquide contient des matières solides qui traitent mécaniquement la surface de paroi intérieure du tube, **en ce qu'**avant le passage du liquide, on introduit un mandrin dans le tube en laissant une fente libre entre lui et la paroi intérieure du tube et **en ce qu'**ensuite, on refoule le liquide à travers cette fente.

2. Procédé de polissage selon la revendication 1, **caractérisé en ce qu'**on utilise des grains abrasifs en qualité de matières solides.

3. Procédé de polissage selon la revendication 1, **caractérisé en ce qu'**on utilise des billes composées d'une matière dure en qualité de matières solides.

4. Procédé selon au moins une des revendications précédentes, **caractérisé en ce que**, pour des tubes en acier inoxydable, on utilise en qualité de milieu chimiquement agressif de l'acide sulfurique, de l'acide phosphorique ou de l'acide chlorhydrique.

5. Procédé selon au moins une des revendications précédentes, **caractérisé en ce que** le liquide contient des agents qui passivent la matière du tube.

6. Procédé selon au moins une des revendications précédentes, **caractérisé en ce qu'**après le polissage effectué avec le liquide, on exécute une enduction anti-adhésive possédant une épaisseur de couche de l'ordre du nanomètre, en refoulant un liquide d'enduction à travers le tube.

7. Procédé selon la revendication 6, **caractérisé en ce que**, pendant le processus du liquide d'enduction, on fait tourner le tube autour de son axe longitudinal.

8. Procédé selon les revendications 6 ou 7, **caractérisé en ce qu'**après le processus du liquide d'enduction, on chauffe le tube pour durcir l'enduction et qu'en même temps, on fait circuler de l'air ou un autre gaz dans le tube.
